# EUROPÄISCHE PATENTSCHRIFT

(11) **EP 2 092 259 B1**
(45) Veröffentlichungstag und Bekanntmachung des Hinweises auf die Patenterteilung: **22.03.2017**
(21) Anmeldenummer: 07846599.4
(22) Anmeldetag: 15.11.2007
(51) Int. Cl.: F28D 1/04, F28D 7/08, F28D 7/16, F28D 1/02, F28F 9/013, F28F 9/18, F28F 19/02, F28F 21/06, F28F 21/08, F28F 27/02

(54) **WÄRMEÜBERTRAGER FÜR KRAFTFAHRZEUG MIT STRANGGEPRESSTEM GEKRÜMMTEN STRÖMUNGSKANAL**
HEAT EXCHANGER
ÉCHANGEUR DE CHALEUR

(30) Priorität: 15.11.2006 DE 102006054221
(43) Veröffentlichungstag der Anmeldung: 26.08.2009
(73) Patentinhaber: MAHLE Behr GmbH & Co. KG, 70469 Stuttgart (DE)
(72) Erfinder: GESKES, Peter, 73760 Ostfildern (DE); BARWIG, Jürgen, 71665 Vaihingen/Enz (DE); RUCKWIED, Jens, 70178 Stuttgart (DE)
(74) Vertreter: Grauel, Andreas
(86) Internationale Anmeldenummer: PCT/EP2007/009878
(87) Internationale Veröffentlichungsnummer: WO 2008/058734

(56) Entgegenhaltungen:
- EP-A- 0 654 645
- EP-A- 0 907 061
- WO-A-2007/104580
- DE-C1- 10 225 812
- DE-U1-212004 000 019
- JP-A- 58 055 684
- JP-A- 58 106 394
- US-A- 3 702 632
- US-A1- 2004 104 020

## Beschreibung

Die Erfindung betrifft einen Wärmeübertrager, insbesondere für ein Kraftfahrzeug, gemäß dem Oberbegriff des Anspruchs 1.

Ein solcher Wärmeübertrager wird beispielsweise in DE 21 2004 000 019 U1 offenbart.

Beim Bau von Wärmeübertragern oder Wärmetauschern für Kraftfahrzeuge werden zunehmend höhere Anforderungen an die Übertragungsleistung bei gleichzeitig begrenztem Bauraum gestellt. Insbesondere bei der Kühlung von Abgas zwecks Rückführung zu einem Verbrennungsmotor müssen dabei zunehmend hohe Wärmeleistungen abgeführt werden. Auch bei anderen Wärmetauschern, wie beispielsweise Ölkühlern oder Ladeluftkühlern, treten zunehmend höhere Anforderungen an die Übertragerleistung oder Tauscherleistung auf. Neben den hohen Leistungen müssen die Wärmetauscher oder Wärmeübertrager auch zunehmend höhere Drücke aushalten. Insbesondere bei Wärmeübertragern oder Wärmetauschern, bei denen auf der zu kühlenden Seite des Wärmetauschers ein gasförmiges Fluid strömt, beispielsweise Abgas oder Ladeluft, steigen die Drücke durch immer höhere Motoraufladungen stetig an.

Grundsätzlich lassen sich die Leistung und die Druckfestigkeit eines Wärmetauschers dadurch erhöhen, dass die Strömungskanalquerschnitte verkleinert werden. Dabei steigt der Druckverlust sowohl bei gasführenden als auch bei ölführenden Kanälen sehr stark an, so dass eine hohe Leistung (Pumpe, Motor) erforderlich ist, um die Fluide durch die Kühler zu pumpen.

Beim Einsatz des Wärmetauschers als Abgaskühler auf der Hochdruckseite des Motors tritt zudem noch die Gefahr auf, dass erhebliche Mengen an Russ zu einer Absenkung der Wärmetauscherleistung führen. Darüber hinaus besteht die Gefahr, dass sich der Kühler durch Russablagerungen zusetzt. Das Problem der Russablagerung wird durch eine Reduktion der Kanalquerschnitte verstärkt.

Aufgabe der Erfindung ist es, einen Wärmeübertrager gemäß dem Oberbegriff des Anspruchs 1 zu schaffen, der bei begrenztem Bauraum eine hohe Wärmeübertragerleistung aufweist und kostengünstig herstellbar ist.

Die Aufgabe ist bei einem Wärmeübertrager, für ein Kraftfahrzeug, mit mindestens einem von einem Fluid durchströmten Strömungskanal, der, zumindest abschnittsweise, einen gekrümmten Verlauf aufweist, vorzugsweise mit mehreren von einem Fluid durchströmten Strömungskanälen, die, zumindest abschnittsweise, einen gekrümmten Verlauf aufweisen, dadurch gelöst, dass der Strömungskanal, der zumindest abschnittsweise, einen gekrümmten Verlauf aufweist, in einem Strangpressprofil vorgesehen ist, wobei der gekrümmte Verlauf quer zur und/oder in Ausdehnungsrichtung des Strömungskanals variiert oder der mindestens eine Strömungskanal stromabwärts eine zunehmende Welligkeit, insbesondere eine zunehmende Amplitude (A) und/oder eine abnehmende Teilung (T), aufweist.

Der Strömungskanal wird zwecks Wärmeaustauschs von einem Fluid durchströmt. Das Strangpressprofil hat den Vorteil, dass es kostengünstig herstellbar ist. Bei im Rahmen der vorliegenden Erfindung durchgeführten Untersuchungen wurde festgestellt, dass die Wärmeübertragerleistung eines Wärmeübertragers durch die erfindungsgemäß gekrümmten Strangpressprofile deutlich erhöht werden kann, ohne dass zu kleine Strömungskanalquerschnitte gewählt werden müssen, die zu einem enormen Anstieg des Druckverlustes oder aber im Fall von Abgaskühlern zu einem Verstopfen durch Russpartikel führen könnten.

Die Turbulenz erzeugenden Biegungen oder Welligkeiten im Strömungskanal variieren, um unerwünschte Druckverluste zu reduzieren. Zur optimalen Anpassung der Wärmetauscherleistung und des Druckverlustes an vorgegebene Anforderungen werden die Amplitude und die Teilung des gekrümmten Verlaufs, insbesondere der Wellen, in Längsrichtung des Strömungskanals verändert. Bevorzugt nimmt dabei die Welligkeit mit zunehmendem Strömungsweg des zu kühlenden Fluids zu, um den Druckverlustanstieg möglichst niedrig zu halten. Die Zunahme der Welligkeit bedeutet in diesem Zusammenhang, dass entweder die Amplitude nach hinten zunimmt oder die Teilung nach hinten abnimmt. Es ist auch möglich, die Änderung der Amplitude mit der Änderung der Teilung zu kombinieren. Diese Variabilität hat Vorteile bezüglich des Druckverlustes, da das vorzugsweise heisse Fluid im vorderen Bereich des Kühlers tendenziell durch eine geringe Fluiddichte einen hohen Druckverlust erzeugt. Eine zusätzliche künstlich erzeugte hohe Turbulenz durch starke Welligkeit im vorderen Bereich des Strömungskanals würde da zu sehr hohen Druckverlusten führen. Diese starke Turbulenz ist dabei im vorderen Kühlerbereich für eine hohe Wärmeleistung nicht zwingend notwendig, da die grosse Temperaturdifferenz zwischen dem zu kühlenden Fluid und dem Kühlmedium auch bei geringer Turbulenz ausreicht, um eine hohe Leistung zu übertragen. Im hinteren Kühlerbereich ist gegenüber dem vorderen Kühlerbereich eine starke Turbulenz zu bevorzugen, da hier der Druckverlustanstieg durch eine erhöhte Fluiddichte geringer ist und die Temperaturdifferenz zwischen beiden Fluiden zu gering ist, um die erforderliche Wärmeleistung zu übertragen. Erst durch die hohe Turbulenz, die durch eine starke Strömungskanalwelligkeit hervorgerufen wird, kann die Leistung auch bei geringen Temperaturunterschieden zwischen beiden Fluiden ausreichend gesteigert werden. Grundsätzlich lässt sich die Welligkeit dabei auch kontinuierlich von vorne nach hinten steigern. bevorzugtes Ausführungsbeispiel des Wärmeübertragers ist dadurch gekennzeichnet, dass mehrere Strömungskanäle, die, zumindest abschnittsweise, einen gekrümmten Verlauf aufweisen, in einem Strangpressprofil vorgesehen sind. Besonders vorteilhaft sind dabei zumindest zwei Strömungskanäle innerhalb eines Strangpressprofils nebeneinander angeordnet. Zwischen zwei benachbarten Strömungskanälen ist in dem Strangpressprofil jeweils eine separierende Innenwand vorgesehen, die einstückig mit dem übrigen Material des Strangpressprofils verbunden ist. Dadurch kann kostengünstig und betriebssicher eine große Berührfläche zwischen dem Fluid und dem wärmeübertragenden Material des Strangpressprofils geschaffen werden. Das Strangpressprofil weist zudem den Vorteil auf, dass die Trennwand beziehungsweise die Trennwände, die auch als Stege bezeichnet werden, die Innendruckfestigkeit des Strangpressprofils deutlich erhöhen, so dass mit solchen Profilen auch höhere Drücke eingestellt werden können, ohne dass Schädigungen oder Verformungen an dem Strangpressprofil auftreten. Die Innenwände beziehungsweise Trennwände oder Stege im Strangpressprofil führen auch zu einer Vergrößerung der Oberfläche und damit zu einer Steigerung der Wärmeleistung.

Allgemein bevorzugt sind mehrere Strangpressprofile vorgesehen, um einen effektiven Wärmeaustausch zwischen dem Kühlmittel und dem Fluid in den Strömungskanälen zu ermöglichen.

Ein weiteres bevorzugtes Ausführungsbeispiel des Wärmeübertragers ist dadurch gekennzeichnet, dass das Strangpressprofil mindestens eine von einem Medium, insbesondere von einem Kühlmittel, umströmte Außenwand und mindestens eine Innenwand aufweist, an der ein Fluid, insbesondere Abgas, entlang strömt. Besonders vorteilhaft sind dabei zumindest zwei Strömungskanäle innerhalb eines Strangpressprofils vorgesehen. Auf diese Art und Weise lässt sich kostengünstig und betriebssicher eine große Berührfläche zwischen dem Fluid und dem wärmeübertragenden Material des Strangpressprofils bereitstellen.

Ein weiteres bevorzugtes Ausführungsbeispiel des Wärmeübertragers ist dadurch gekennzeichnet, dass die von dem Medium umströmte Außenwand im Querschnitt einen, zumindest teilweise, verrundeten Verlauf aufweist. Dadurch wird die Biegbarkeit des Strangpressprofils verbessert. Gemäß einem weiteren wesentlichen Aspekt der Erfindung wird ein zunächst linear ausgepresstes Strangpressprofil in einem weiteren Bearbeitungsschritt mit dem gekrümmten Verlauf, insbesondere mit einem Wellenprofil, versehen.

Ein weiteres bevorzugtes Ausführungsbeispiel des Wärmeübertragers ist dadurch gekennzeichnet, dass mehrere Strangpressprofile vorgesehen insbesondere integriert sind, die jeweils mindestens einen Strömungskanal, der zumindest abschnittsweise, einen gekrümmten Verlauf aufweist, vorzugsweise mehrere Strömungskanäle, die, zumindest abschnittsweise, einen gekrümmten Verlauf aufweisen, umfassen. Der erfindungsgemäße Wärmeübertrager weist Strömungskanäle auf, die voneinander getrennt und vorzugsweise wellenförmig geformt sind. Damit lassen sich vergrößerte Kanalquerschnitte realisieren und im Falle eines Abgaskühlers tritt kein Verstopfungsproblem durch Russ auf. Die hohe Leistungsdichte des erfindungsgemäßen Wärmeübertragers wird im Wesentlichen dadurch erreicht, dass eine vorzugsweise wellenförmige Umlenkung eines Fluids in einem wellenförmigen Strangpressprofil zu einer Wirbelbildung in der Strömung führt. Der Druckverlust steigt im Vergleich zu einem geraden Strangpressprofil mit gleicher Kanalquerschnittsfläche nur wenig. Die erhöhte Wärmeleistung kann auf eine Verlängerung des Strömungsweges sowie auf Turbulenz beziehungsweise Wirbelbildung zurückgeführt werden, und zwar sowohl auf der Seite des zu kühlenden Fluids als auch auf der Kühlfluidseite.

Ein weiteres bevorzugtes Ausführungsbeispiel des Wärmeübertragers ist dadurch gekennzeichnet, dass das mindestens eine Strangpressprofil aus einer Legierung auf Basis von Aluminium besteht. Aluminium hat eine durchaus gute Korrosionsresistenz und lässt sich auf kostengünstige Art und Weise in weitgehend beliebige Querschnittsformen strangpressen. Insbesondere bei der Kühlung von Abgas entsteht Kondensat, das einen sehr niedrigen pH-Wert aufweist und daher sehr korrosiv ist. Dies ist bei allen Abgaskühlern der Fall, das heißt sowohl bei Kühlern, die bei der Hochdruck-Abgasrückführung als auch bei Kühlern, die bei der Niederdruck-Abgasrückführung eingesetzt werden. Bei ausreichender Kühlung ist Aluminium durchaus auch im Bau von Abgas-Wärmetauschern verwendbar. Dabei hat sich gezeigt, dass insbesondere Strangpressprofile ohne längere Wärmebehandlung einen sehr guten Korrosionsschutz bieten, da die feine Kornstruktur des Aluminiums nicht zerstört wird. Diese feine Kornstruktur ist allerdings Voraussetzung, dass die Korrosion keine tiefen Furchen, sondern nur einen oberflächigen Materialabtrag hervorruft, was wiederum eine lange Haltbarkeit des Wärmeübertragers gewährleistet.

Ein weiteres bevorzugtes Ausführungsbeispiel des Wärmeübertragers ist dadurch gekennzeichnet, dass der mindestens eine Strömungskanal eine korrosionshemmende Beschichtung aufweist. Insbesondere bei Ausbildung des Wärmeübertragers als Abgas-Wärmetauscher kann durch solche Beschichtungen die Lebensdauer des Wärmeübertragers verlängert werden.

Ein weiteres bevorzugtes Ausführungsbeispiel des Wärmeübertragers ist dadurch gekennzeichnet, dass der mindestens eine Strömungskanal zusätzlich zu dem zumindest abschnittsweise gekrümmten Verlauf eine 180°-Umlenkung aufweist. Dadurch wird ein U-förmig durchströmter Wärmeübertrager geschaffen, der auch als U-Flow-Wärmeübertrager bezeichnet wird. In einer bevorzugten Ausführungsform werden bei einem U-förmig durchströmten Wärmeübertrager zwei Böden verwendet. Die Strangpressprofile werden auf beiden Seiten in diese Böden gefügt. Die Umlenkung des zu kühlenden Fluids erfolgt vorzugsweise in einer separaten Umlenkkappe.

Ein weiteres bevorzugtes Ausführungsbeispiel des Wärmeübertragers ist dadurch gekennzeichnet, dass der gekrümmte Verlauf Turbulenz erzeugende Biegungen oder Welligkeiten aufweist. Das Strangpressprofil kann verschiedene Abschnitte mit unterschiedlichen Biegungen und/oder Welligkeiten aufweisen.

Neben der reinen sinusartigen Welligkeit sind auch Wellenformen denkbar, die nicht gleichförmig verlaufen. So sind Strömungskanäle denkbar, die einen sägezahnartigen oder trapezartigen Verlauf mit teilweise geraden Abschnitten aufweisen.

Weitere bevorzugte Ausführungsbeispiele des Wärmeübertragers sind dadurch gekennzeichnet, dass das Verhältnis zwischen der Amplitude und der Dicke des Strangpressprofils im Bereich 0 bis 2, insbesondere im Bereich 0 bis 0,7, besonders bevorzugt im Bereich von 0 bis 0,3, liegt.

Ein weiteres bevorzugtes Ausführungsbeispiel des Wärmeübertragers ist dadurch gekennzeichnet, dass das Verhältnis zwischen der Teilung und der Dicke des Strangpressprofils im Bereich 3 bis 10 liegt.

Ein weiteres bevorzugtes Ausführungsbeispiel des Wärmeübertragers ist dadurch gekennzeichnet, dass das Strangpressprofil eine Dicke im Bereich von 3 bis 12 mm, vorzugsweise im Bereich von 5 bis 9 mm, aufweist.

Weitere bevorzugte Ausführungsbeispiele des Wärmeübertragers sind dadurch gekennzeichnet, dass das Strangpressprofil gebogene beziehungsweise gekrümmte Bereiche aufweist und/oder wellenförmig umgeformt ist. Es können einzelne Abschnitte des Strangpressprofils wellenförmig umgeformt sein. Es ist aber auch möglich, dass das Strangpressprofil über seine ganze Länge oder einen großen Teil seiner Länge wellenförmig umgeformt ist.

Ein weiteres bevorzugtes Ausführungsbeispiel des Wärmeübertragers ist dadurch gekennzeichnet, dass das Strangpressprofil sägezahnartig oder trapezartig umgeformt ist. Es können einzelne Abschnitte des Strangpressprofils sägezahnartig oder trapezartig umgeformt sein. Es ist aber auch möglich, dass das Strangpressprofil über seine ganze Länge oder einen großen Teil seiner Länge sägezahnartig oder trapezartig umgeformt ist. Bei der trapezartigen Welligkeit wird das Fluid zunächst umgelenkt und es werden Wirbel erzeugt. In den nachfolgenden geraden Strecken laufen die Wirbel langsam aus und erhöhen auch im geraden Abschnitt die Wärmeleistung. Erst wenn die Turbulenz und die Wirbel weitestgehend abgeklungen sind, wird durch erneute Biegungen die Turbulenz wieder angefacht. Grundsätzlich sind darüber hinaus auch alle weiteren denkbaren Biegungsformen möglich. Bei der sägezahnartigen Ausformung können sowohl der auf- als auch der absteigende Ast steiler verlaufen als der andere Ast. Ziel all dieser Varianten ist es, den Druckverlust zu minimieren, ohne dass die Wärmeübertragerleistung zu stark absinkt.

Auch in einem U-förmig durchströmbaren Wärmetauscher lassen sich Modifikationen der Welligkeit umsetzen. So kann ein vorderer Strömungspfad vor der Umlenkung keine oder eine geringe Welligkeit und ein hinterer Strömungspfad hinter der Umlenkung eine starke Welligkeit aufweisen. Damit wird auch für einen U-förmig durchströmten Kühler eine hohe Leistung bei moderatem Druckanstieg erzielt.

Ein weiteres bevorzugtes Ausführungsbeispiel des Wärmeübertragers ist dadurch gekennzeichnet, dass dem Wärmeübertrager eine Bypass-Klappe vor- oder nachgeschaltet ist. Die Bypass-Klappe dient dazu, das Fluid ungekühlt an dem Bereich der gekühlten Strömungskanäle vorbeizulenken. Bei einem gerade durchströmten Kühler muss dazu ein Bypass-Kanal vorgesehen werden, der idealerweise über ein Isolationsrohr thermisch isoliert wird. Bevorzugt ist das Isolationsrohr aus Edelstahl ausgebildet. Bei einem U-förmig durchströmten Kühler wird die Bypass-Funktion zum Beispiel in einem Eintrittsdiffusor erreicht, indem die Bypass-Klappe das Fluid am Kühler vorbeiströmen lässt.

Ein weiteres bevorzugtes Ausführungsbeispiel des Wärmeübertragers ist dadurch gekennzeichnet, dass das Fluid Abgas eines Verbrennungsmotors eines Kraftfahrzeugs ist. Besonders die Aufgabe der Kühlung von im Allgemeinen sehr heißem Abgas kann durch einen erfindungsgemäßen Wärmeübertrager besonders gut gelöst werden, da dieser eine sehr hohe Wärmeübertragungsleistung bei gegebenem Bauraum aufweist.

Ein weiteres bevorzugtes Ausführungsbeispiel des Wärmeübertragers ist dadurch gekennzeichnet, dass das Fluid Ladeluft eines Verbrennungsmotors eines Kraftfahrzeugs ist. Auch hier können mit dem erfindungsgemäßen Wärmeübertrager deutliche Verbesserungen erzielt werden.
Ein weiteres bevorzugtes Ausführungsbeispiel des Wärmeübertragers ist dadurch gekennzeichnet, dass das Fluid ein Schmieröl aus einem Schmierölkreislauf eines Kraftfahrzeugs ist. Auch hier lassen sich mit dem erfindungsgemäßen Wärmeübertrager deutliche Verbesserungen erzielen.

Ein weiteres bevorzugtes Ausführungsbeispiel des Wärmeübertragers ist dadurch gekennzeichnet, dass das Strangpressprofil endseitig an einem Bodenelement festgelegt ist.

Ein weiteres bevorzugtes Ausführungsbeispiel des Wärmeübertragers ist dadurch gekennzeichnet, dass beide Enden des Strangpressprofils in das Bodenelement münden.

Ein weiteres bevorzugtes Ausführungsbeispiel des Wärmeübertragers ist dadurch gekennzeichnet, dass das Strangpressprofil endseitig an zwei Bodenelementen festgelegt ist. Das Strangpressprofil erstreckt sich zwischen den beiden Bodenelementen.

Ein weiteres bevorzugtes Ausführungsbeispiel des Wärmeübertragers ist dadurch gekennzeichnet, dass die Enden des Strangpressprofils jeweils in eines der Bodenelemente münden.

Die Strömungskanäle münden bei einem gerade durchströmbaren Wärmeübertrager bevorzugt auf der Ein- und Austrittsseite in einen Boden, wo sie thermisch gefügt (verschweißt oder verlötet), mechanisch gefügt (verstemmt oder abgedichtet) oder verklebt werden. Die Böden werden mit einem Gehäuse des Wärmeübertragers durch Verschweißen, Verlöten, Verschrauben, Verkrimpen oder Verkleben verbunden. An das Gehäuse wird dann bei einem gerade durchströmten Wärmeübertrager auf beide Seiten ein Diffusor angebaut, der verschraubt, verschweißt, verlötet oder verklebt sein kann. Bei einem U-förmig durchströmten Wärmeübertrager wird nur auf der Eintrittsseite ein Diffusor angebaut, wobei der Diffusor eine Trennwand enthält. Der Eintrittsdiffusor oder der Austrittsdiffusor kann jeweils eine Bypass-Klappe enthalten, um das Fluid ungekühlt an dem Bereich der gekühlten Strömungskanäle vorbeizulenken.

Ein weiteres bevorzugtes Ausführungsbeispiel des Wärmeübertragers ist dadurch gekennzeichnet, dass das Bodenelement beziehungsweise die Bodenelemente vorzugsweise stoffschlüssig mit einem Diffusor verbunden sind. Die stoffschlüssige Verbindung kann zum Beispiel durch Schweißen, Löten, Kleben hergestellt werden. Die Bodenelemente können auch mit dem Diffusor verschraubt werden.

Ein weiteres bevorzugtes Ausführungsbeispiel des Wärmeübertragers ist dadurch gekennzeichnet, dass die Strömungskanäle beziehungsweise Strangpressprofile zum Beispiel durch Kleben, Ofenlötung, Flammlöten, Induktionslöten oder Schweißen, stoffschlüssig mit dem Bodenelement beziehungsweise den Bodenelementen verbunden sind.

Ein weiteres bevorzugtes Ausführungsbeispiel des Wärmeübertragers ist dadurch gekennzeichnet, dass der gesamte Wärmeübertrager in einem Ofen gelötet ist beziehungsweise wird. Grundsätzlich kann bei einem Lötprozess der gesamte Kühler mit allen Dichtflächen wie beispielsweise Rohr-Boden-Verbindung oder Boden-Gehäuse-Verbindung in einem Lötofen (Vakuum oder Nocolok) gelötet werden. Um allerdings die Vorteile der feinen Kornstruktur für ein gutes Korrosionsverhalten aufrechtzuerhalten, ist nur ein lokales kurzzeitiges thermisches Aufheizen, insbesondere im Bereich der Fügestellen, vorteilhaft. Dies kann durch lokales Flammlöten, Induktionslöten oder Schweißen, wie Laserschweißen, erreicht werden.

Ein weiteres bevorzugtes Ausführungsbeispiel des Wärmeübertragers ist dadurch gekennzeichnet, dass das Strangpressprofil in einem von einem insbesondere flüssigen Kühlmittel durchströmbaren Gehäuse angeordnet ist. Eine besonders effektive Kühlung des Fluids lässt sich dadurch erreichen, dass die Strömungskanäle in dem Gehäuse angeordnet sind. Es ist aber auch möglich, dass das Gehäuse fehlt und das Fluid mittels Kühlluft gekühlt wird.

Ein weiteres bevorzugtes Ausführungsbeispiel des Wärmeübertragers ist dadurch gekennzeichnet, dass das Gehäuse einen Zufluss und einen Abfluss für das Kühlmittel aufweist.

Ein weiteres bevorzugtes Ausführungsbeispiel des Wärmeübertragers ist dadurch gekennzeichnet, dass in dem Gehäuse mindestens ein Leitelement zur Führung des Kühlmittels angeordnet ist. Zur weiteren Verbesserung der Umströmung der Strömungskanäle können auf der Seite mit dem Kühlmittel bevorzugt Leitbleche angeordnet sein, welche die Strömungskanäle bei auftretenden Vibrationen abstützen und eine Schädigung des Kühlers verhindern. Solche Leitelemente können die Strömung auf bestimmte Bereiche richten und/oder Turbulenzen in dem Kühlmittel erzeugen.

Ein weiteres bevorzugtes Ausführungsbeispiel des Wärmeübertragers ist dadurch gekennzeichnet, dass in dem Gehäuse Stützmittel zur Halterung der Strömungskanäle angeordnet sind. Die Stützmittel dienen dazu, Schwingungsamplituden der Strömungskanäle zu begrenzen und somit Rissbildungen auch bei starken Vibrationen zu verhindern.

Ein weiteres bevorzugtes Ausführungsbeispiel des Wärmeübertragers ist dadurch gekennzeichnet, dass zwischen den Strangpressprofilen Rippen, Leitbleche oder sonstige Elemente, insbesondere Abstützelemente, angeordnet sind. Die Stützmittel können als Rippen oder Turbulenzerzeuger ausgebildet werden und erhöhen den Wärmeübergang deutlich.

Ein weiteres bevorzugtes Ausführungsbeispiel des Wärmeübertragers ist dadurch gekennzeichnet, dass die Elemente zwischen den Strangpressprofilen eingelötet, eingeklebt oder eingeklemmt sind. Insoweit sich die Stützmittel in einem Gehäuse in flüssigem Kühlmittel befinden, können diese auch aus einem thermisch anspruchslosen Material (wie Kunststoff) bestehen, um Kosten zu sparen.

Ein weiteres bevorzugtes Ausführungsbeispiel des Wärmeübertragers ist dadurch gekennzeichnet, dass das Gehäuse im Wesentlichen aus Aluminium gebildet ist. Dadurch werden die Herstellkosten reduziert.

Ein weiteres bevorzugtes Ausführungsbeispiel des Wärmeübertragers ist dadurch gekennzeichnet, dass das Gehäuse im Wesentlichen aus Kunststoff gebildet ist. Dadurch wird die Herstellung vereinfacht.

Wenn das Kühlmedium kein Kühlmedium sondern Kühlluft ist, dann kann auch auf das Gehäuse verzichtet werden. Ein derartiger Kühler kann dann im Kühlmodul oder an anderer passender Stelle im Motorraum eingebaut werden, wo er ausreichend mit Kühlluft versorgt wird.

Die Erfindung betrifft des Weiteren ein Verfahren zum Herstellen eines vorab beschriebenen Wärmeübertragers, bei dem ein stranggepresstes Rohr so umgeformt wird, dass es, zumindest abschnittsweise, einen gekrümmten Verlauf aufweist.

Weitere Vorteile, Merkmale und Einzelheiten der Erfindung ergeben sich aus der nachfolgenden Beschreibung, in der unter Bezugnahme auf die Zeichnung verschiedene Ausführungsbeispiele im Einzelnen beschrieben sind. Es zeigen:
- Figur 1: eine schematische Schnittansicht auf einen Wärmeübertrager gemäß einem ersten Ausführungsbeispiel ohne Bypass-Kanal;
- Figur 2: eine schematische Schnittansicht auf einen ähnlichen Wärmeübertrager wie in Figur 1 mit einem Bypass-Kanal;
- Figur 3A: eine schematische Schnittansicht eines Wärmeübertragers gemäß einem weiteren Ausführungsbeispiel mit einer U-förmigen Durchströmung und mit einer Bypass-Klappe;
- Figur 3B: einen ähnlichen Wärmeübertrager wie in Figur 3A ohne Bypass-Klappe;
- Figur 3C: ein erfindungsgemäßes Strangpressprofil im Querschnitt;
- Figur 4: eine schematische Schnittansicht eines ähnlichen Wärmeübertragers wie in Figur 3B gemäß einem weiteren Ausführungsbeispiel;
- Figur 5: eine schematische Schnittansicht eines ähnlichen Wärmeübertragers wie in Figur 3B gemäß einem weiteren Ausführungsbeispiel;
- Figur 6: eine schematische Schnittansicht eines Wärmeübertragers gemäß einem weiteren Ausführungsbeispiel;
- Figuren 7A und B: zwei Ausführungsbeispiele von wellig geformten Strömungskanälen;
- Figur 8: ein weiteres Ausführungsbeispiel eines trapezartig gewellten Strömungskanals;
- Figur 9: eine schematische Schnittansicht eines ähnlichen Wärmeübertragers wie in Figur 1 ohne Gehäuse;
- Figur 15.2: eine auf Messungen und Rechnungen beruhende Darstellung der bevorzugten Wahl eines hydraulischen Durchmessers im Hinblick auf einen verbesserten Wärmeübergang;
- Figur 17.2: einer auf Messungen und Rechnungen beruhender Nachweis eines hydraulischen Durchmessers, in dem eine Stabilisierung eines Druckverlusts bei einem bestimmten Niveau, selbst bei zunehmender Betriebszeit des Strömungskanals, zu erwarten ist;
- Figur 18.2: eine auf Messungen und Rechnungen beruhende Darstellung einer bevorzugten Wahl eines hydraulischen Durchmessers in Bezug auf das Verhältnis aus dem durch das erste Fluid benetzbaren Umfang und einem äußeren Umfang des Strömungskanals;
- Figur 19A.2: eine Abwandlung einer bevorzugten Ausführungsform eines Querschnitts eines Strömungskanals mit stranggepresstem Kanalmantel und mit dem Kanalmantel stranggepressten Stegen;
- Figur 100A.2: eine Abwandlung einer weiteren Aufürhungsform wie in Fig. 19A.2 mit Teilstegen;
- Figuren 111A.2 und 111 B.2: zwei Abwandlungen einer weiteren Ausführungsform wie in Figur 19A.2 mit Teilstegen.

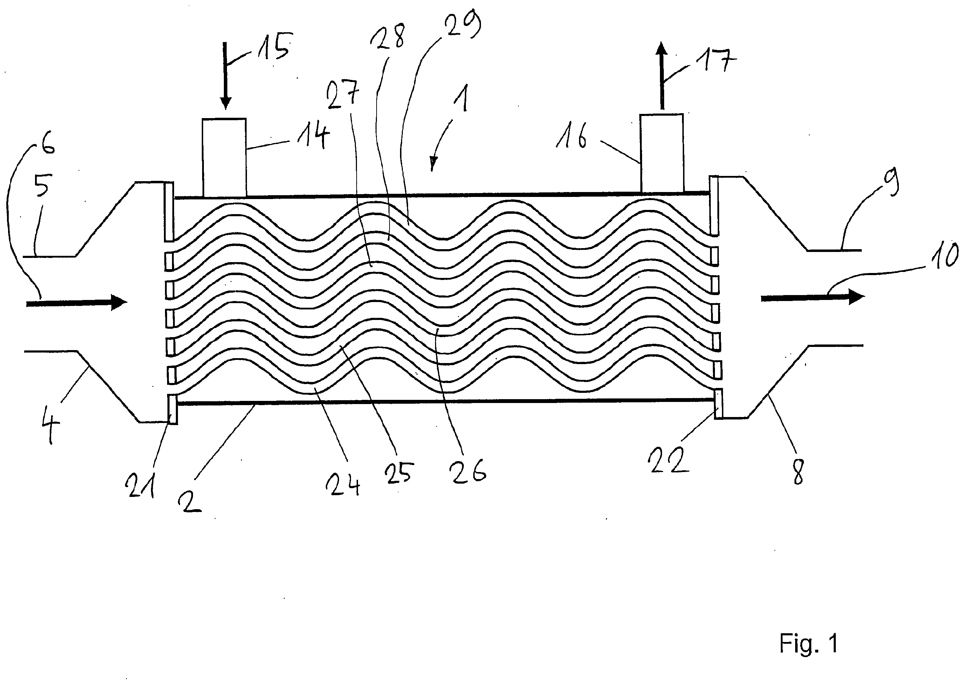

In Figur 1 ist ein Wärmeübertrager 1 schematisch im Schmitt dargestellt. Der Wärmeübertrager 1 umfasst ein Gehäuse 2, das von einem Sammelkasten 4 ausgeht. Der Sammelkasten 4 stellt einen Diffusor dar und ist mit einem Eintrittsstutzen 5 ausgestattet. Durch den Eintrittsstutzen 5 wird dem Sammelkasten 4 Gas zugeführt, wie durch einen Pfeil 6 angedeutet ist. Auf der gegenüberliegenden Seite des Gehäuses 2 ist ein Sammelkasten 8 angeordnet, der ebenfalls einen Diffusor darstellt. Der Sammelkasten 8 weist einen Gasaustrittsstutzen 9 auf. Das austretende Gas ist durch einen Pfeil 10 anbedeutet.

Des Weiteren ist an dem Gehäuse 2 ein Eintrittsstutzen 14 für ein Kühlmittel vorgesehen. Das eintretende Kühlmittel ist durch einen Pfeil 15 angedeutet. Des Weiteren ist das Gehäuse 2 mit einem Austrittsstutzen 16 für Kühlmittel ausgestattet. Das austretende Kühlmittel ist durch einen Pfeil 17 angedeutet. Die Schnittstellen zwischen dem Gehäuse 2 und den Sammelkästen 4, 8 sind jeweils durch ein Bodenelement 21, 22 definiert. Zwischen den Bodenelementen 21, 22 erstrecken sich Strömungskanäle 24 bis 29. Die Strömungskanäle 24 bis 29 sind in Rohren ausgebildet, die als Strangpressprofil ausgeführt sind. Gemäß einem wesentlichen Aspekt der Erfindung weisen die Strangpressprofile mit den Strömungskanälen 24 bis 29 keinen geradlinigen, sondern einen wellenförmigen Verlauf auf.

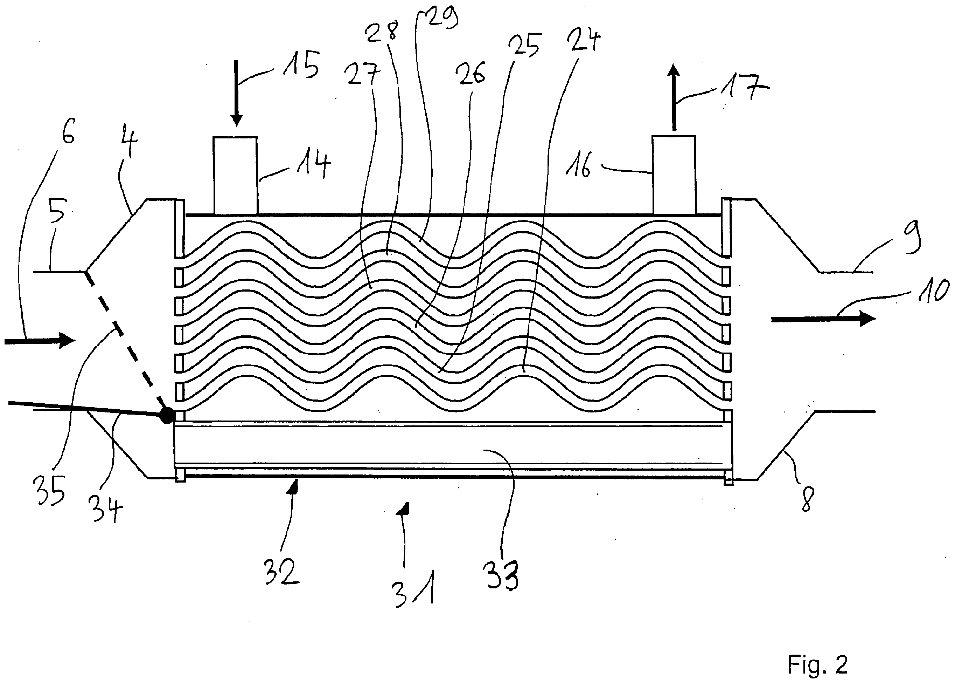

In Figur 2 ist ein Wärmeübertrager 31 schematisch im Schnitt dargestellt, der dem Wärmeübertrager 1 aus Figur 1 ähnelt. Zur Bezeichnung gleicher Teile werden gleiche Bezugszeichen verwendet. Um Wiederholungen zu vermeiden, wird auf die vorangegangene Beschreibung der Figur 1 verwiesen. Im Folgenden wird hauptsächlich auf die Unterschiede zwischen den Ausführungsbeispielen der Figuren 1 und 2 eingegangen.

Der in Figur 2 dargestellte Wärmeübertrager 31 umfasst ein Gehäuse 32 mit einem integrierten Bypass-Kanal 33. Der Bypass-Kanal 33 schafft eine direkte Verbindung zwischen den Sammelkästen 4 und 8 unter Umgehung der gekühlten Strömungskanäle 24 bis 29. Zur Steuerung der Strömung ist in dem Sammelkasten 4 eine Bypass-Klappe 34 vorgesehen. In der durchgezogen dargestellten Stellung der Bypass-Klappe 34 verläuft die Strömung durch die Strömungskanäle 24 bis 29 und nicht durch den Bypass-Kanal 33. Wenn die Bypass-Klappe 34 in eine gestrichelt angedeutete Stellung 35 bewegt wird, dann verläuft die Strömung nur durch den Bypass-Kanal 33 und nicht durch die Strömungskanäle 24 bis 29.

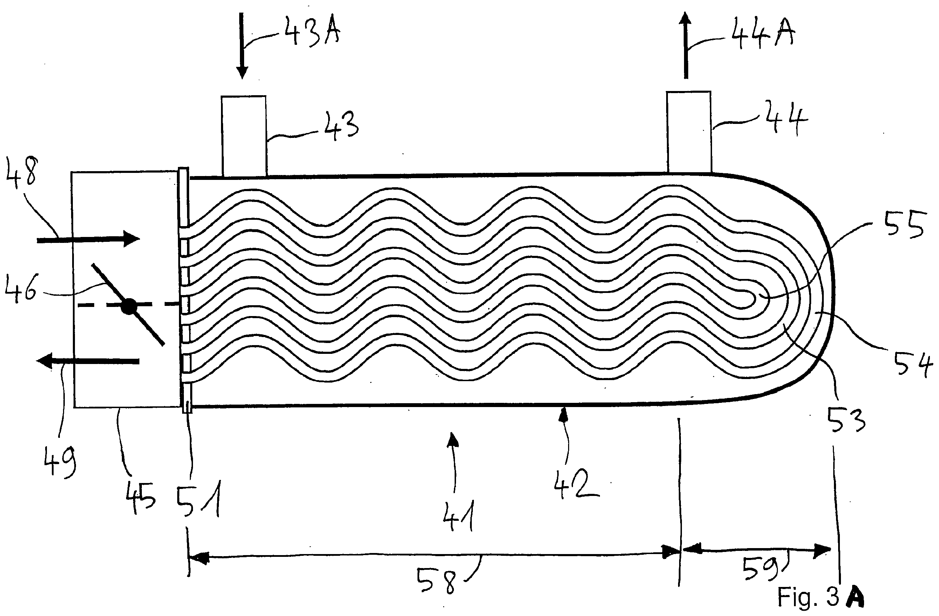

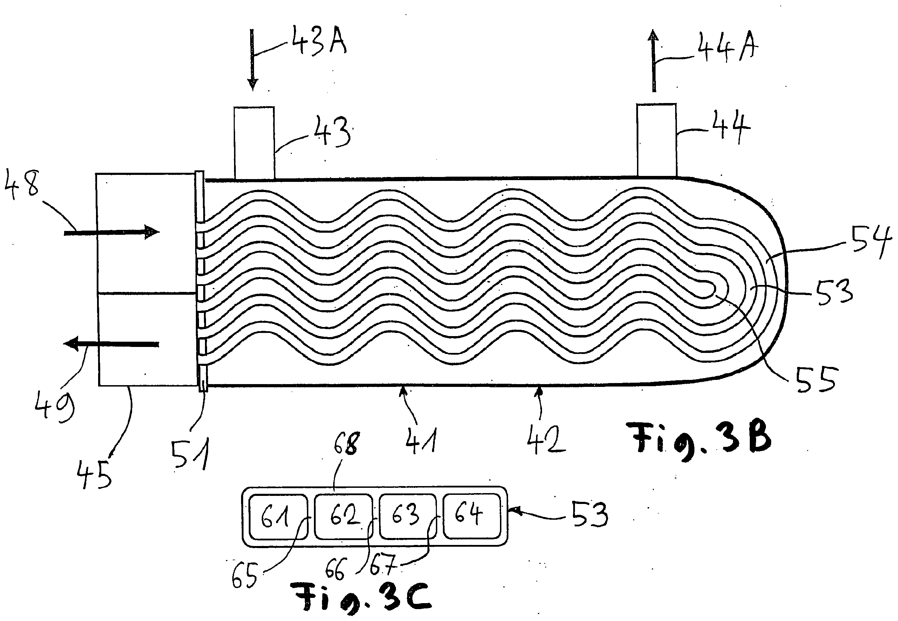

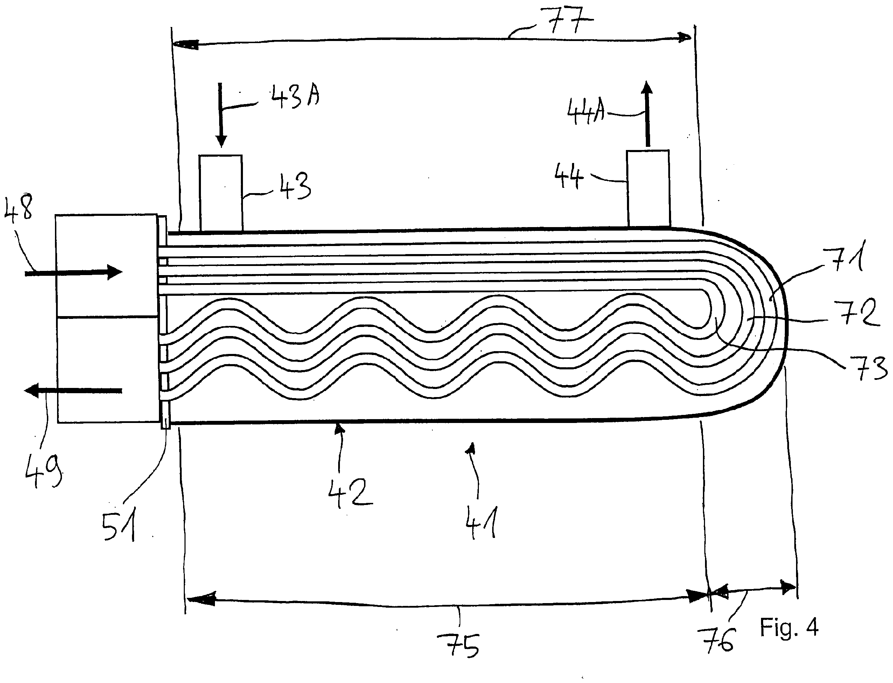

In den Figuren 3A, 3B und 4 sind verschiedene Ausführungsbeispiele eines Wärmeübertragers 41 mit einem Gehäuse 42 dargestellt. Das Gehäuse 42 ist mit einem Eintrittsstutzen 43 für Kühlmittel ausgestattet. Das eintretende Kühlmittel ist durch einen Pfeil 43A angedeutet. Das Gehäuse 42 ist des Weiteren mit einem Austrittsstutzen 44 für das Kühlmittel ausgestattet. Das austretende Kühlmittel ist durch einen Pfeil 44A angedeutet. Das Gehäuse 42 geht an einer Seite in einen Sammelkasten 45 über, der mit einer Bypass-Klappe 46 oder einer Mischklappe 46 ausgestattet ist. Durch einen Pfeil 48 ist angedeutet, dass dem Sammelkasten 45 eine Gasströmung zugeführt wird. Die eintretende Gasströmung 48 wird durch das Kühlmittel 43A, 44A in dem Gehäuse 42 gekühlt. Der gekühlte austretende Gasstrom ist durch einen Pfeil 49 angedeutet.

An der Schnittstelle zwischen dem Gehäuse 42 und dem Sammelkasten 45 ist ein Bodenelement 51 angeordnet. In das Bodenelement 51 münden Strömungskanäle 53 bis 55, die auch von dem Bodenelement 51 ausgehen. Die Strömungskanäle 53 bis 55 verlaufen in einem Abschnitt 58 nicht gerade sondern wellenförmig und werden in einem weiteren Abschnitt 59 um 180° umgelenkt.

Bei dem in Figur 3B dargestellten Ausführungsbeispiel wurde die Mischklappe oder Bypass-Klappe (46 in Figur 3A) weggelassen. Ansonsten ist das in Figur 3B dargestellte Ausführungsbeispiel identisch mit dem in Figur 3A dargestellten Ausführungsbeispiel.

In Figur 3C ist angedeutet, dass der Strömungskanal 53 aus den Figuren 3A und 3B als Strangpressprofil ausgeführt ist. Das Strangpressprofil 53 umfasst vier Kanäle 61 bis 64, die jeweils durch einen Steg 65, 66, 67 voneinander getrennt sind. Die Stege 65 bis 67 werden auch als innere Wände oder Trennwände bezeichnet. Durch die Kanäle 61 bis 64 wird Gas zur Kühlung durchgeführt. Die Kanäle 61 bis 64 werden außen von einer Außenwand 68 begrenzt. Die Außenwand 68 hat im Wesentlichen einen rechteckigen Querschnitt mit abgerundeten Ecken.

Bei dem in Figur 4 dargestellten Ausführungsbeispiel ist angedeutet, dass in dem Gehäuse 42 auch Strömungskanäle 71 bis 73 angeordnet sein können, die nur in einem Abschnitt 75 gekrümmt verlaufen. Nach einem Abschnitt 76, in dem die Strömungskanäle 71 bis 73 um 180° umgelenkt werden, verlaufen die Strömungskanäle 71 bis 73 in einem weiteren Abschnitt 77 geradlinig.

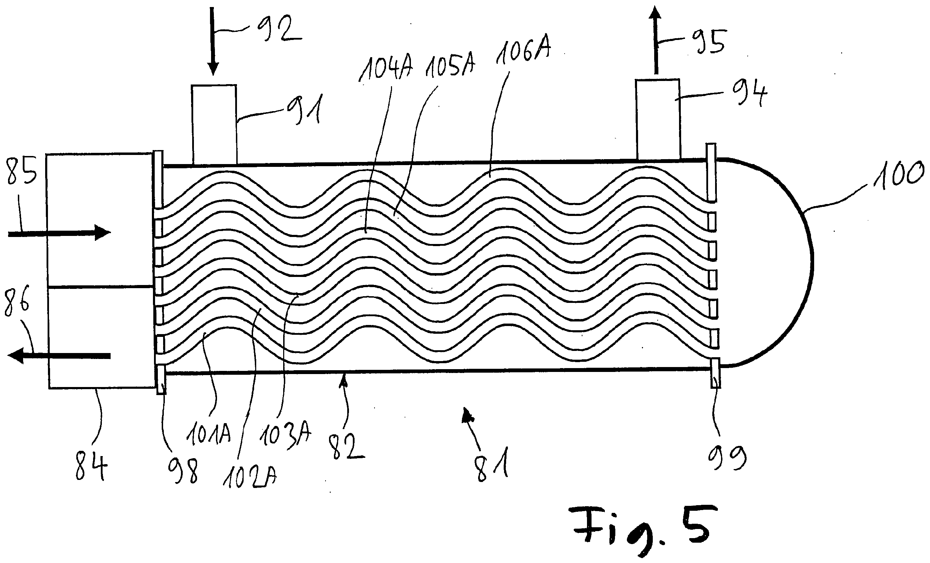

In Figur 5 ist ein Wärmeübertrager 81 schematisch im Schnitt dargestellt, der ein Gehäuse 82 umfasst. An einer Seite des Gehäuses 82 ist ein Sammelkasten 84 vorgesehen, der in sich unterteilt ist. Das eintretende Gas ist durch einen Pfeil 85 angedeutet. Das austretende Gas ist durch einen Pfeil 86 angedeutet. Das Gehäuse 82 ist des Weiteren mit einem Eintrittsstutzen 91 für Kühlmittel ausgestattet. Das eintretende Kühlmittel ist durch einen Pfeil 92 angedeutet. Das Gehäuse 82 ist des Weiteren mit einem Austrittsstutzen 94 für Kühlmittel ausgestattet. Das austretende Kühlmittel ist durch einen Pfeil 95 angedeutet.

An der Schnittstelle zwischen dem Sammelkasten 84 und dem Gehäuse 82 ist ein Bodenelement 98 vorgesehen. Ein weiteres Bodenelement 99 ist an dem benachbarten Ende des Gehäuses 82 vorgesehen. An dem Bodenelement 99 weist das Gehäuse 82 einen Umlenkabschnitt 100 auf. Zwischen den beiden Bodenelementen 98 und 99 erstrecken sich Strömungskanäle 101 A, 102A, 103A, 104A, 105A und 106A. Die Strömungskanäle 101 A haben einen wellenförmigen Verlauf. Das eintretende Gas 85 gelangt aus dem Sammelkasten 84 durch die Strömungskanäle 104A bis 106A zu dem Bodenelement 99. Das aus den Strömungskanälen 104A bis 106A austretende Gas wird in dem Umlenkabschnitt 100 des Gehäuses 82 gemeinsam umgelenkt und gelangt durch die Strömungskanäle 101 A bis 103A wieder in den Sammelkasten 84.

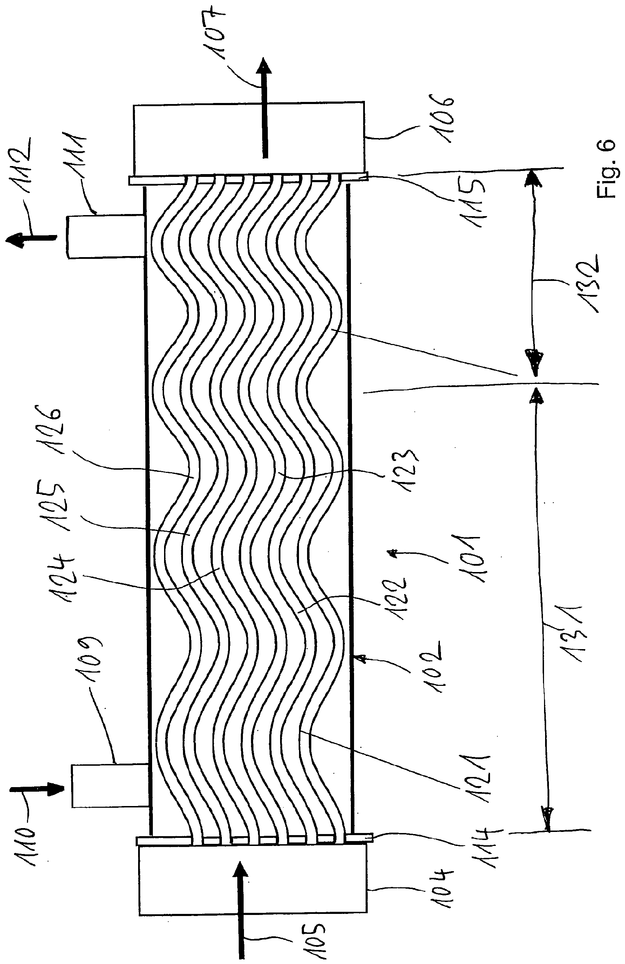

In Figur 6 ist ein Wärmeübertrager 101 im Schnitt dargestellt, der ein Gehäuse 102 umfasst. Das Gehäuse 102 geht von einem Sammelkasten 104 aus. Dem Sammelkasten 104 wird Gas zugeführt, wie durch einen Pfeil 105 angedeutet ist. Auf der gegenüberliegenden Seite wird das Gehäuse 102 von einem Sammelkasten 106 begrenzt. Das austretende Gas ist durch einen Pfeil 107 angedeutet. Das Gehäuse 102 ist des Weiteren mit einem Eintrittsstutzen 109 für Kühlmittel ausgestattet. Das eintretende Kühlmittel ist durch einen Pfeil 110 angedeutet. Das Gehäuse 102 ist des Weiteren mit einem Austrittsstutzen 111 für Kühlmittel ausgestattet. Das austretende Kühlmittel ist durch einen Pfeil 112 angedeutet.

An den Schnittstellen zwischen dem Gehäuse 102 und den Sammelkästen 104, 106 ist jeweils ein Bodenelement 114, 115 vorgesehen. Zwischen den beiden Bodenelementen 114 und 115 erstrecken sich Strömungskanäle 121 bis 126. Die Strömungskanäle 121 bis 126 sind in einem Abschnitt 131 mit einer flacheren Wellung versehen als in einem weiteren Abschnitt 132.

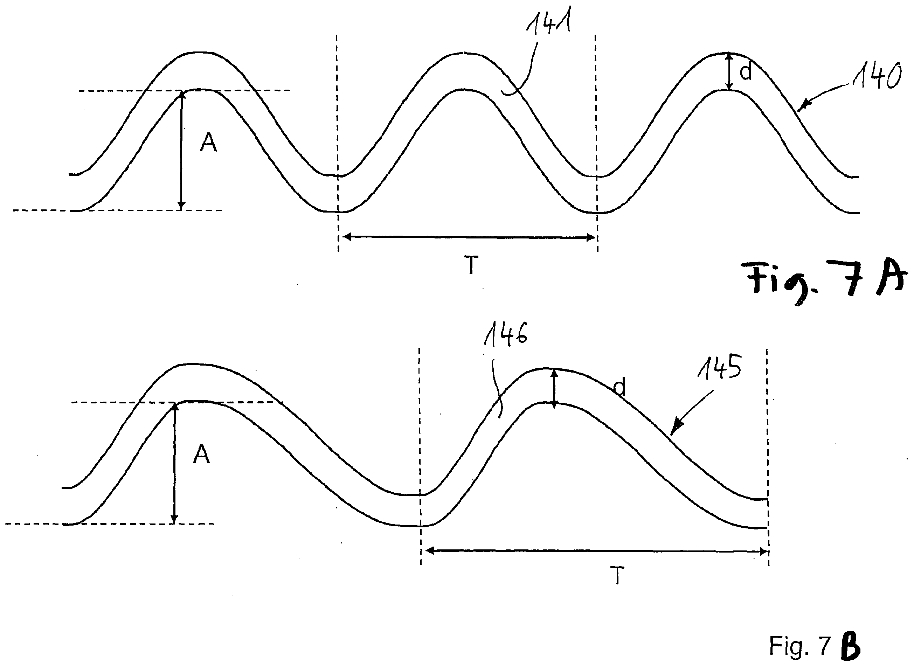

In Figur 7A ist ein Abschnitt eines Rohres 140 in der Draufsicht dargestellt. Das Rohr 140 ist als Strangpressprofil ausgeführt und mit einem Strömungskanal 141 ausgestattet. Wie in Figur 3C dargestellt ist, kann das Rohr 140 aber auch mit mehreren Strömungskanälen ausgestattet sein. Das Rohr 140 weist einen im Wesentlichen sinusförmig gewellten Verlauf auf. Die Amplitude des wellenförmigen Verlaufs ist mit A bezeichnet. Die Teilung ist mit T bezeichnet. Die Dicke des Rohres 140 ist mit d bezeichnet.

In Figur 7B ist angedeutet, dass ein als Strangpressprofil ausgeführtes Rohr 145 mit einem Strömungskanal 146 auch sägezahnartig gewellt sein kann. Die Amplitude der sägezahnartigen Wellung ist mit A bezeichnet. Die Teilung ist mit T bezeichnet. Die Dicke des Rohres 145 ist mit d bezeichnet.

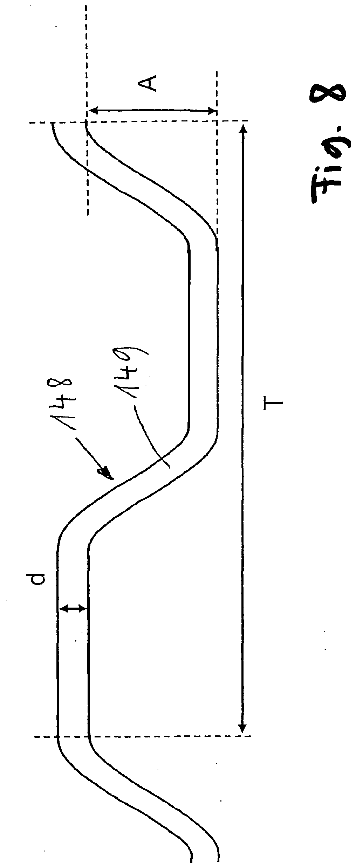

In Figur 8 ist ein Rohr 148 mit einem Strömungskanal 149 dargestellt, das eine trapezförmige Wellung aufweist. Die Amplitude der trapezförmigen Wellung ist mit A bezeichnet. Die Teilung der trapezförmigen Wellung ist mit T bezeichnet. Die Dicke des als Strangpressprofil ausgeführten Rohres 148 ist d bezeichnet.

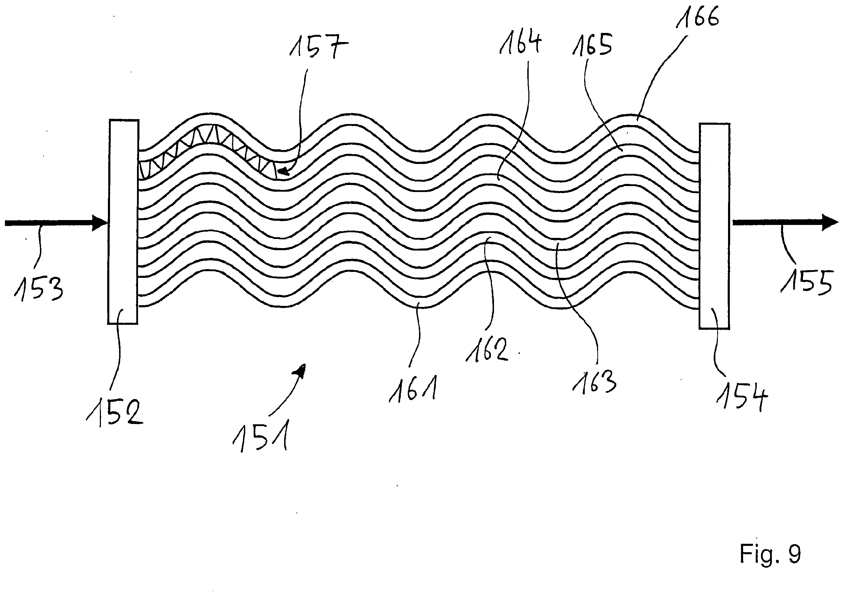

In Figur 9 ist ein Wärmeübertrager 151 schematisch im Schnitt dargestellt. Der Wärmeübertrager 151 umfasst ein Eintrittselement 152 für ein Fluid. Das eintretende Fluid ist durch einen Pfeil 153 angedeutet. Der Wärmeübertrager 151 umfasst des Weiteren ein Austrittselement 154 für das Fluid. Das austretende Fluid ist durch einen Pfeil 155 angedeutet. Zwischen dem Eintrittselement 152 und dem Austrittselement 154 verlaufen Strömungskanäle 161 bis 166, die in Strangpressprofilen vorgesehen sind. Zwischen den einzelnen Strangpressprofilen sind Leitelemente 157 für Kühlluft angeordnet. Die Leitelemente 157 dienen gleichzeitig oder alternativ als Stützelemente und können mit den Strangpressprofilen verklebt, verlötet oder verklemmt werden.

Bei dem in Figur 9 dargestellten Ausführungsbeispiel werden die Strangpressprofile mit den Strömungskanälen 161 bis 166 vorzugsweise von Kühlluft umströmt. Deshalb kann bei dem in Figur 9 dargestellten Wärmeübertrager 151 auf ein Gehäuse verzichtet werden. Der Wärmeübertrager 151 kann in einem Kühlmodul oder an einer anderen passenden Stelle im Motorraum eingebaut werden, wo er mit ausreichend Kühlluft versorgt wird.

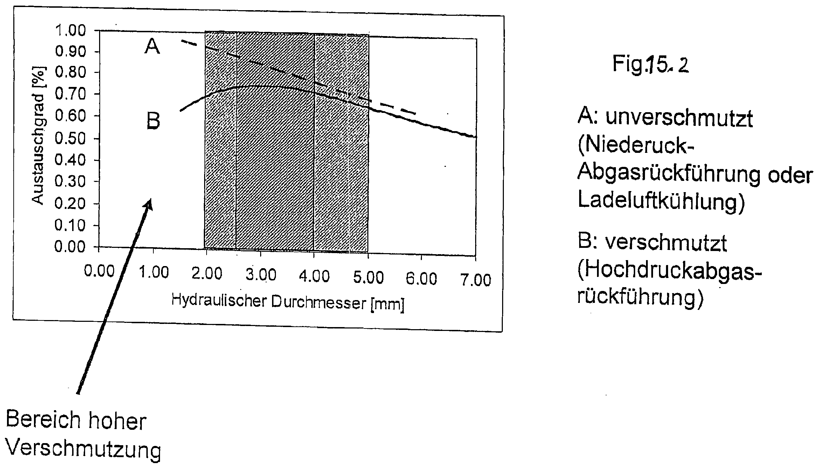

**Fig. 15****.****2** zeigt ein Verhalten eines Wärmeübergangs bzw. Austauschgrads und damit das exemplarische Verhalten einer Wärmeübertragungsleistung eines Wärmetauschers anhand einer an Messdaten orientierten Rechnung für ein Beispiel eines als Abgaskühler ausgebildeten Wärmetauschers. Die Daten sind für typische Eintrittsbedingungen angegeben, wobei zur Vereinfachung ein Abgasdruck im Bereich von 1 bar gewählt worden ist. Die Ergebnisse sind jedoch exemplarisch auch für andere Abgasdrücke. Eine Kurve A zeigt das Verhalten eines Wärmetauschers im unverschmutzten Zustand, eine Kurve B das Verhalten eines Wärmetauschers im verschmutzten Zustand. Fig. 15.2 stellt den Austauschgrad in Abhängigkeit des hydraulischen Durchmessers dar.
Wie anhand von Kurve A in Fig. 15.2 zu erkennen ist, nimmt der für die Wärmetauscherleistung maßgebliche Austauschgrad/Wärmeübergang mit abnehmendem hydraulischen Durchmesser weiter zu für den Fall, dass der Wärmetauscher unverschmutzt ist. Unterhalb eines hydraulischen Durchmessers von 6 mm befindet sich der Austauschgrad in einem akzeptablen Bereich. Wie anhand von Kurve B in Fig. 15.2 zu erkennen ist, nimmt der Austauschgrad unterhalb eines bestimmten hydraulischen Durchmessers in nicht akzeptabler Weise wieder ab für den Fall, dass der Wärmetauscher verschmutzt ist. Eine solche Untergrenze eines hydraulischen Durchmesser liegt bei 1,5 mm. Das Konzept der Erfindung sieht somit vor, dass ein Strömungskanal gekennzeichnet ist durch einen als das vierfache des Verhältnisses aus der Fläche des durchströmbaren Querschnitts zu einem durch das Abgas benetzbaren Umfang gebildeten hydraulischen Durchmessers, der in einem Bereich zwischen 1,5 mm und 6 mm liegt. Des weiteren ist aus den unterschiedlich schraffierten Bereichen von Fig. 15.2 ersichtlich, dass in bevorzugter Weise ein hydraulischer Durchmesser in einem Bereich zwischen 2 mm und 5 mm liegen sollte. Wie der dunkel schraffierte Bereich zeigt, liegt das vergleichsweise flach verlaufende obere Niveau eines Austauschgrads bei einem verschmutzten Wärmetauscher im bevorzugten Bereich eines hydraulischen Durchmessers zwischen 2,5 und 3,5 mm bzw. 2,8 mm und 3,8 mm, wobei letzterer Bereich vor allem für einen Hochdruckwärmetauscher relevant ist. Es hat sich nämlich gezeigt, dass der Verschmutzungsgrad bei einem Niedertemperaturwärmetauscher aufgrund eines vorgeschalteten Abgasreinigers vor dem Wärmetauscher in Form des Abgaskühlers weniger relevant ist als bei einem Hochdruckwärmetauscher in Form eines Abgaskühlers, der üblicherweise höheren Partikel- und Verschmutzungsbelastungen ausgesetzt ist, als ein Niedertemperaturwärmetauscher. Gleichwohl ist für einen Niedertemperaturwärmetauscher ebenso wie für einen Hochdrucktemperaturwärmetauscher ein Druckverlust relevant.

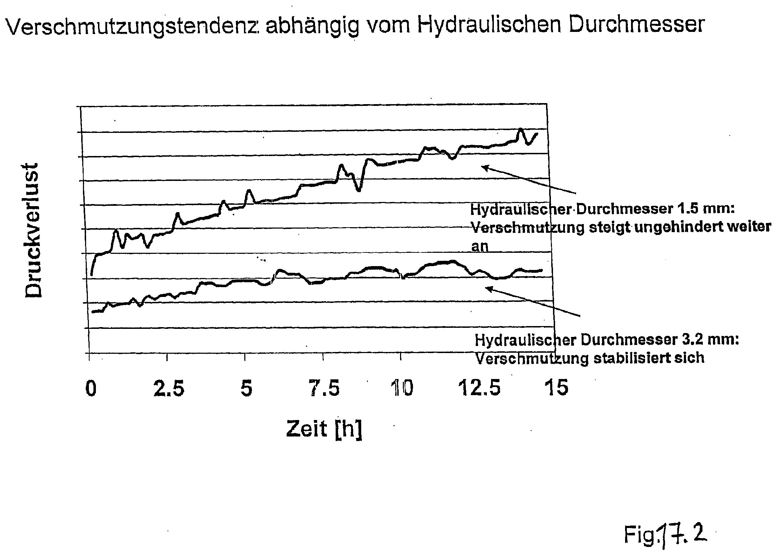

Aus der oberen Kurve in **Fig. 17****.****2** ist ersichtlich, dass ein Druckverlust - vorliegend dargestellt anhand eines Druckverlusts für einen Strömungskanal mit grenzwertigem hydraulischen Durchmesser von 1,5 mm - mit zunehmender Verschmutzung - angegeben als Betriebszeit in Stunden - weiter ansteigt. Dagegen hat sich gezeigt, dass bei Wahl eines hydraulischen Durchmessers von 3,2 mm - dies ebenso bei Wahl eines hydraulischen Durchmessers im Bereich zwischen 3,0 mm und 3,4 mm, bevorzugt zwischen 3,1 mm und 3,3 mm - selbst bei zunehmender Betriebszeit sich offenbar der Verschmutzungsgrad stabilisiert, so dass sich ein Druckverlust auf einem akzeptablen Niveau stabilisiert.

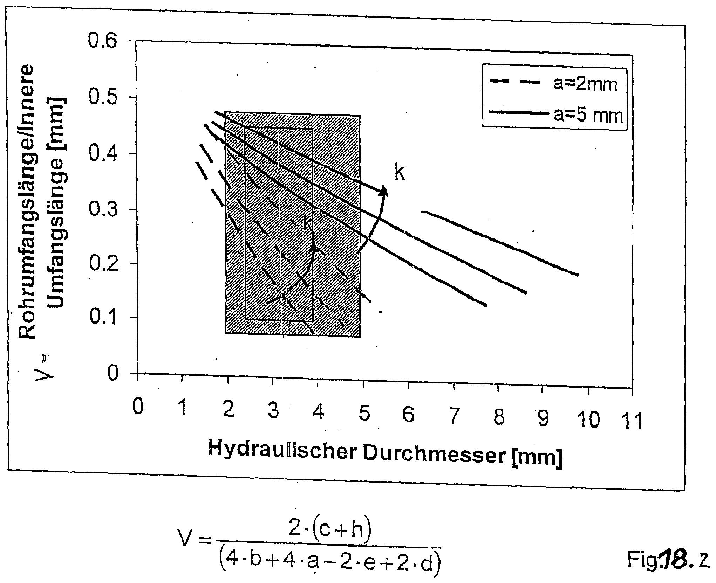

**Fig. 18****.****2** stellt das Verhältnis aus dem durch ein Abgas benetzbaren Umfang und einem äußeren Umfang des Strömungskanals in Abhängigkeit des hydraulischen Durchmessers dar. Ein bevorzugtes Verhältnis ergibt sich aus den zuvor erläuterten schraffierten Bereichen eines bevorzugten hydraulischen Durchmessers von 2 mm bis 5 mm, insbesondere 2,8 mm bis 3,8 mm. Das genannte Verhältnis liegt im Bereich zwischen 0,1 und 0,5, um verbesserte Austauschgrade und Druckverlustgrade zu erreichen. Eine vergleichbare Tendenz ist auch bei den weiteren im Folgenden näher beschriebenen konstruktiven Ausführungen eines durchströmbaren Querschnitts bei einem Strömungskanal feststellbar. So zeig Fig. 18.2 das erläuterte Verhältnis für verschiedene Stegabstände a, vorliegende für zwei Beispiele a = 2 mm und a = 5 mm und für unterschiedliche Werte eines Verhältnisses eines Abstands zwischen zwei gegenüberliegenden Teilstegen zu einer Höhe des Rohrquerschnitts, das vorliegend mit k bezeichnet ist. Das Verhältnis k sollte in einem Bereich unterhalb von 0,8 mm, vorzugsweise in einem Bereich zwischen 0,3 mm und 0,7 mm liegen. Vorliegend nimmt das Verhältnis k eines Abstands e zwischen zwei gegenüberliegenden Teilstegen zu einer Höhe b des Rohrquerschnitts von 0,25 auf 0,75 in Pfeilrichtung zu. Diese Analyse gilt sowohl für einen Abgaskühler im Rahmen einer Hochdruckauslegung bei einem Abgasrückführsystem als auch Abgaskühler im Rahmen einer Niederdruckauslegung bei einem Abgasrückführsystem.

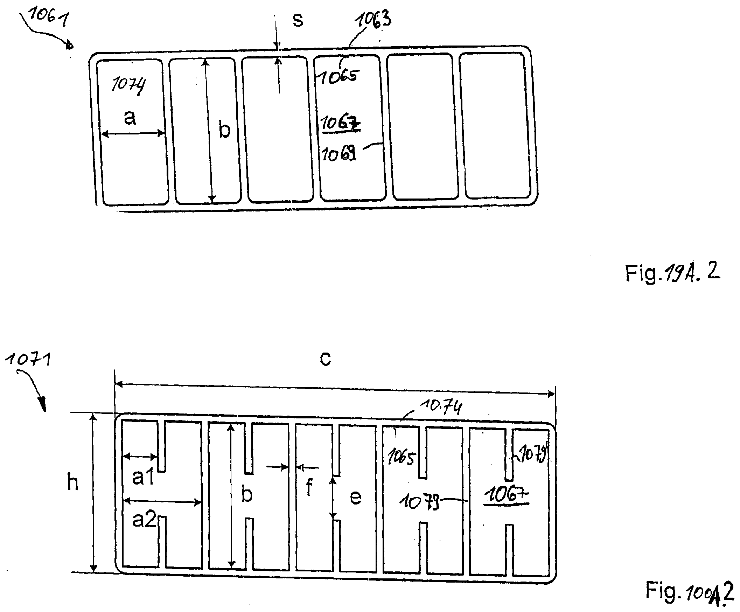

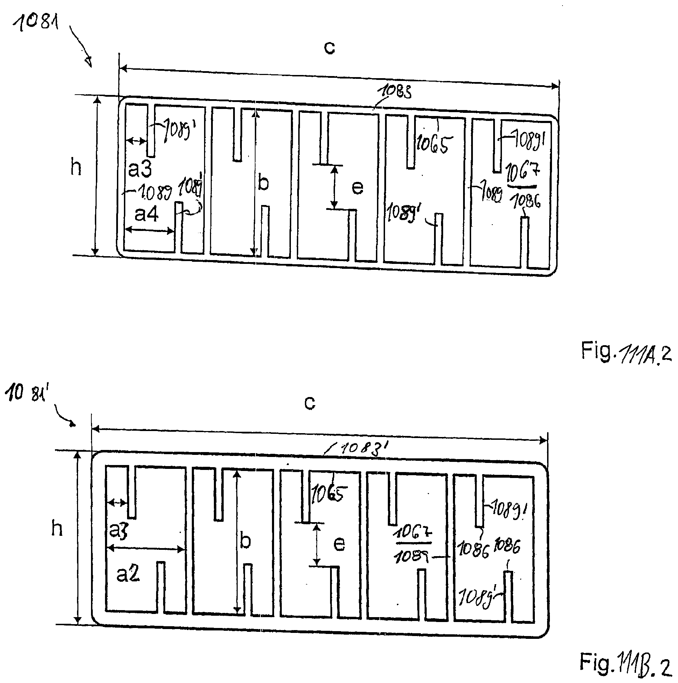

Im Folgenden werden in **Fig. 19A.2** bis **Fig. 111 B.2** beispielhafte konstruktive Ausführungen eines Querschnitts unterschiedlicher bevorzugter Strömungskanäle beschrieben. Dabei sollte gleichwohl klar sein, dass Abwandlungen derselben sowie eine beliebige Kombination von Merkmalen der konkret in den Figuren beschriebenen Ausführungsformen möglich sind und dennoch ein hydraulischer Durchmesser im Bereich zwischen 1,5 mm und 6 mm, bevorzugt zwischen 2 mm und 5 mm, bevorzugt zwischen 2,8 mm und 3,8 mm erreicht werden kann. Insbesondere ist bei den in den folgenden Figuren gezeigten Ausführungsformen jeweils eine Abwandlung gezeigt, bei der eine Kanalmantelstärke und einer Stegstärke d gleich bzw. ähnlich ist und eine weitere Abwandlung gezeigt, bei der ein Verhältnis aus einer Stegstärke d und einer Kanalmantelstärke s unterhalb von 1.0 mm liegt. Entsprechend lassen sich auch die Wandstärken von Teilstegen oder ähnliche Abmessungen, je nach zu erreichendem Zweck, variieren und anpassen.

Insbesondere zeigen die folgenden maßstabgerechten Figuren Ausführungsformen von Strömungskanälen für Abgasrückführsysteme oder Wärmetauscher, beispielsweise anstatt der Strömungskanäle beim Abgaswärmetauscher. Insbesondere erfüllen die nachfolgend erläuterten Strömungskanäle allesamt die Voraussetzungen eines hydraulischen Durchmessers gemäß dem Konzept der Erfindung.

Fig. 19A.2 zeigt zwei Abwandlungen eines Strömungskanals 1061, wobei die Mantelstärke s und Stegstärke d im Wesentlichen gleich sind. Darüber hinaus sind für gleiche Merkmale gleiche Bezugszeichen genutzt.

Der Strömungskanal 1061 ist als ein insgesamt stranggepresstes Profil, also als ein stranggepresster Kanalmantel zusammen mit den stranggepressten Stegen gebildet. Der Strömungskanal 1061 weist dementsprechend einen Kanalmantel 1063 mit einem von einer Kanalmantelinnenseite 1065 umgebenen Innenraum 1067 auf, der vorliegend zur wärmeaustauschenden Führung des ersten Fluids in Form eines Abgases ausgebildet ist. Weiter weist der Strömungskanal 1061 vorliegend eine Anzahl von fünf im Innenraum 1067 an der Kanalmantelinnenseite 1065 angeordnete Stege 1069 auf, die zusammen mit dem Kanalmantel 1063 als integrales stranggepresstes Profil gebildet sind. Ein Steg 1069 verläuft gänzlich parallel zu einer senkrecht zur Zeichenebene stehenden Strömungskanalachse ununterbrochen entlang des im Gehäuse eines Wärmetauschers gebildeten Strömungspfades. Der gezeigte durchströmbare Querschnitt quer zur Strömungskanalachse ist zur Führung des Abgases im Innenraum 1067 ausgelegt. Die Auslegung erfolgt anhand des hydraulischen Durchmessers dₕ, für das vorliegende Strömungskanalprofil 1061 unter Bezugnahme auf die Abstände a, b. Der hydraulische Durchmesser ergibt sich als das Vierfache des Verhältnisses aus der Fläche des durchströmbaren Querschnitts zu einem durch das Abgas benetzbaren Umfang. Die Fläche des durchströmbaren Querschnitts ist vorliegend ein Vielfaches des Produkts aus a und b. Der benetzbare Umfang ist vorliegend das ebenfalls Vielfache der doppelten Summe aus a und b. a gibt dabei die Breite des freien Querschnitts einer im Strömungskanal durch die Stege 1069 unterteilten Strömungslinie 1074 an und b gibt vorliegend die freie Höhe der Strömungslinie 1074 an.

Bei diesem Strömungskanal 1063 als auch bei den folgenden näher erläuterten Strömungskanälen liegt eine Wandstärke s im Bereich zwischen 0,2 mm und 2 mm, vorzugsweise im Bereich zwischen 0,8 mm und 1,4 mm. Eine Höhe b eines Strömungsfadens 1074 bzw. eine Höhe des Innenraums 1067 liegt vorliegend im Bereich zwischen 2,5 mm und 10 mm, vorzugsweise im Bereich zwischen 4,5 mm und 7,5 mm. Eine Breite a eines Strömungsfadens 1074 liegt im Bereich zwischen 3 mm und 10 mm, vorzugsweise im Bereich zwischen 4 mm und 6 mm.
**Fig. 100A.2** zeigt eine Abwandlung einer besonders bevorzugten Ausführungsform eines Strömungskanals 1071 die sich - wie zuvor erläutert - lediglich in der Wandstärke des Kanalmantels 1073 relativ zur Wandstärke eines Stegs 1079 unterscheiden. Der Strömungskanal 1071 weist außerdem die Stege 1079 in Form von Ganzstegen auf und daneben abwechselnd zu den Ganzstegen 1079 angeordnete Teilstege 1079'. Der Strömungskanal 1071 ist wiederum gänzlich als stranggepresstes Profil gebildet, wobei ein Stromfaden 1074 wiederum durch den Abstand zweier Ganzstege 1079 gebildet ist. Vorliegend sind jeweils zwei Teilstege 1079' mit sich gegenüberliegenden Stirnseiten 1076 angeordnet.

In **Fig. 111A.2** und **Fig. 111B.2** sind zwei weitere Abwandlungen 1081, 1081' einer besonders bevorzugten Ausführungsform eines Strömungskanals 1081, 1081' gezeigt, bei denen zwei Teilstege 1089' mit sich seitlich gegeneinander versetzten Stirnseiten 1086 angeordnet sind.

Ein Verhältnis eines Abstands a₃ eines ersten Teilstegs 1089' zu einem Ganzsteg 1089 zu einem Abstand a₄ eines zweiten Teilstegs 1089' zu dem Ganzsteg 1089 liegt in einem Bereich zwischen 0,5 mm und 0,9 mm, vorzugsweise in einem Bereich zwischen 0,6 mm und 0,8 mm. Grundsätzlich beträgt der Abstand e zwischen zwei gegenüberliegenden Teilstegen 1079' und/oder zwischen zwei gegeneinander versetzten Teilstegen 1089' zu einer Höhe b des Rohrquerschnitts in einem Bereich unterhalb von 0,8 mm, insbesondere in einem Bereich zwischen 0,3 mm und 0,7 mm.

Die in den Figuren 1, 2, 3A, 3B, 3C, 4, 5, 6, 7A, 7B, 8, 9, 15.2, 17.2, 18.2, 19A.2, 100A.2, 111 A.2 und 111 B.2 beschriebenen Strangpressteile sind insbesondere aus Aluminium ausgebildet. Insbesondere weisen die Strangpresswerkstoffe die nachfolgenden Massenanteile insbesondere zum Korrosionsschutz auf:
Silizium: Si<1%, insbesondere Si<0,6%, insbesondere Si<0,15%
Eisen: Fe<1,2%, insbesondere Fe<0,7%, insbesondere Fe<0,35%
Kupfer: Cu<0,5%, insbesondere Fe<0,2%, insbesondere Cu<0,1%
Chrom: Cr<0,5%, insbesondere 0,05%<Cr<0,25%, insbesondere 0,1%<Cr<0,25%
Magnesium: 0,02%<Mg<0,5%, insbesondere 0,05%<Mg<0,3%
Zink: Zn<0,5%,insbesondere 0,05%<Zn<0,3%
Titan: Ti<0,5%,insbesondere 0,05%<Ti<0,25%

Zur Erzielung einer hohen Korrosionsfestigkeit der Aluminiumlegierungen sind die Korngrößen, gemessen im Schnitt des Bauteils in Strangpressrichtung, < 250Micrometer, insbesondere <100Micrometer, insbesondere <50Micrometer.

## Patentansprüche

1. Wärmeübertrager für ein Kraftfahrzeug, mit mindestens einem von einem Fluid durchströmten Strömungskanal (24-29;53-55;71-73;101A-106A;121-126;141;146;149;161-166), der, zumindest abschnittsweise, einen gekrümmten Verlauf aufweist, vorzugsweise mit mehreren von einem Fluid durchströmten Strömungskanälen, die, zumindest abschnittsweise, einen gekrümmten Verlauf aufweisen, wobei der Strömungskanal (24-29;53-55;71-73;101A-106A;121-126;141;146;149;161-166), der zumindest abschnittsweise, einen gekrümmten Verlauf aufweist, in einem Strangpressprofil vorgesehen ist, **dadurch gekennzeichnet, dass** der gekrümmte Verlauf quer zur und/oder in Ausdehnungsrichtung des Strömungskanals variiert oder der mindestens eine Strömungskanal stromabwärts eine zunehmende Welligkeit, insbesondere eine zunehmende Amplitude (A) und/oder eine abnehmende Teilung (T), aufweist.

2. Wärmeübertrager nach Anspruch 1, **dadurch gekennzeichnet, dass** mehrere Strömungskanäle (24-29;53-55;71-73;101A-106A;121-126;141;146;149;161-166), die, zumindest abschnittsweise, einen gekrümmten Verlauf aufweisen, in einem Strangpressprofil vorgesehen sind.

3. Wärmeübertrager nach Anspruch 1 oder 2, **dadurch gekennzeichnet, dass** das Strangpressprofil mindestens eine von einem Medium, insbesondere von einem Kühlmittel, umströmte Außenwand (68) und mindestens eine Innenwand (65-67) aufweist, an der ein Fluid, insbesondere Abgas, entlang strömt.

4. Wärmeübertrager nach Anspruch 3, **dadurch gekennzeichnet, dass** die von dem Medium umströmte Außenwand (68) im Querschnitt einen, zumindest teilweise, verrundeten Verlauf aufweist.

5. Wärmeübertrager nach einem der vorhergehenden Ansprüche, **dadurch gekennzeichnet, dass** mehrere Strangpressprofile integriert sind, die jeweils mindestens einen Strömungskanal (24-29;53-55;71-73;101A-106A;121-126;141;146;149;161-166), der zumindest abschnittsweise, einen gekrümmten Verlauf aufweist, vorzugsweise mehrere Strömungskanäle, die, zumindest abschnittsweise, einen gekrümmten Verlauf aufweisen, umfassen.

6. Wärmeübertrager nach einem der vorhergehenden Ansprüche, **dadurch gekennzeichnet, dass** der mindestens eine Strömungskanal zusätzlich zu dem zumindest abschnittsweise gekrümmten Verlauf eine 180°-Umlenkung aufweist.

7. Wärmeübertrager nach einem der vorhergehenden Ansprüche, **dadurch gekennzeichnet, dass** der gekrümmte Verlauf Turbulenz erzeugende Biegungen oder Welligkeiten aufweist.

8. Wärmeübertrager nach einem der vorhergehenden Ansprüche, **dadurch gekennzeichnet, dass** das Strangpressprofil gebogene beziehungsweise gekrümmte Bereiche aufweist, es insbesondere wellenförmig, sägezahnartig oder trapezartig umgeformt ist.

9. Wärmeübertrager nach einem der vorhergehenden Ansprüche, **dadurch gekennzeichnet, dass** das Strangpressprofil endseitig, insbesondere beidseitig an einem Bodenelement (51) festgelegt ist.

10. Wärmeübertrager nach einem der Ansprüche 1 bis 9, **dadurch gekennzeichnet, dass** das Strangpressprofil endseitig an zwei Bodenelementen (21,22;98,99;114,115;152,154) festgelegt ist, und dass insbesondere die Enden des Strangpressprofils jeweils in eines der Bodenelemente (21,22;98,99;114,115;152,154) münden.

11. Wärmeübertrager nach einem der vorhergehenden Ansprüche, **dadurch gekennzeichnet, dass** das Strangpressprofil in einem von einem insbesondere flüssigen Kühlmittel durchströmbaren Gehäuse (2;32;42;82;102) angeordnet ist, welches insbesondere einen Zufluss und einen Abfluss für das Kühlmittel aufweist.

12. Wärmeübertrager nach Anspruch 11, **dadurch gekennzeichnet, dass** in dem Gehäuse mindestens ein Leitelement zur Führung des Kühlmittels und/oder Stützmittel zur Halterung der Strömungskanäle angeordnet sind.

13. Wärmeübertrager nach einem der vorhergehenden Ansprüche, **dadurch gekennzeichnet, dass** zwischen den Strangpressprofilen Rippen, Leitbleche (157) oder sonstige Elemente (157), insbesondere Abstützelemente (157), angeordnet, insbesondere eingelötet, eingeklebt oder eingeklemmt sind.

## Claims

1. A heat exchanger for a motor vehicle, with at least one flow channel (24-29; 53-55; 71-73; 101A-106A; 121-126; 141; 146; 149; 161-166) with a fluid throughflow which has, at least in sections, a curved shape, preferably with several flow channels with a fluid throughflow which have, at least in sections, a curved shape, wherein the flow channel (24-29; 53-55; 71-73; 101A-106A; 121-126; 141; 146; 149; 161-166) which has, at least in sections, a curved shape is provided in an extruded profile, **characterised in that** the curved shape varies transversely to and/or in the direction of the extension of the flow channel or the at least one flow channel has an increasing undulation downstream, in particular an increasing amplitude (A) and/or a decreasing pitch (T).

2. The heat exchanger according to claim 1, **characterised in that** several flow channels (24-29; 53-55; 71-73; 101A-106A; 121-126; 141; 146; 149; 161-166) which have, at least in sections, a curved shape are provided in an extruded profile.

3. The heat exchanger according to claim 1 or 2, **characterised in that** the extruded profile has at least one outer wall (68) surrounded by the flow of a medium, in particular a cooling agent, and at least one inner wall (65-67) along which a fluid, in particular exhaust gas, flows.

4. The heat exchanger according to claim 3, **characterised in that** the outer wall (68) surrounded by the flow of the medium has an at least partially rounded shape in the cross section.

5. The heat exchanger according to one of the preceding claims, **characterised in that** several extruded profiles are integrated that each comprise at least one flow channel (24-29; 53-55; 71-73; 101A-106A; 121-126; 141; 146; 149; 161-166) which has, at least in sections, a curved shape, preferably several flow channels which have, at least in sections, a curved shape.

6. The heat exchanger according to one of the preceding claims, **characterised in that**, in addition to the curved shape at least in sections, the at least one flow channel has a 180° deflection.

7. The heat exchanger according to one of the preceding claims, **characterised in that** the curved shape has turbulence-producing bends or undulations.

8. The heat exchanger according to one of the preceding claims, **characterised in that** the extruded profile has bent or curved areas and is in particular reshaped with undulations, to be sawtooth-like or trapezoidal.

9. The heat exchanger according to one of the preceding claims, **characterised in that** the extruded profile is fixed at the end, in particular at both ends, on a base element (51).

10. The heat exchanger according to one of claims 1 to 9, **characterised in that** the extruded profile is fixed at the end on two base elements (21, 22; 98, 99; 114, 115; 152, 154) and that in particular the ends of the extruded profile each empty into one of the base elements (21, 22; 98, 99; 114, 115; 152, 154).

11. The heat exchanger according to one of the preceding claims, **characterised in that** the extruded profile is situated in a housing (2; 32; 42; 82; 102) through which in particular a liquid cooling agent can flow and which in particular has an inflow and an outflow for the cooling agent.

12. The heat exchanger according to claim 11, **characterised in that** at least one guiding element for guiding the cooling agent and/or supporting means to hold the flow channels are located in the housing.

13. The heat exchanger according to one of the preceding claims, **characterised in that** ribs, baffle plates (157) or other elements (157), in particular support elements (157), are located between the extruded profiles, in particular soldered in, cemented in, or wedged in.

## Revendications

1. Echangeur de chaleur pour un véhicule automobile, comprenant au moins un conduit d'écoulement (24-29 ; 53-55 ; 71-73 ; 101A-106A ; 121-126 ; 141 ; 146 ; 149 ; 161-166) traversé par un fluide, conduit d'écoulement qui présente au moins partiellement un tracé courbe, comportant de préférence plusieurs conduits d'écoulement traversés par un fluide, conduits d'écoulement qui présentent au moins partiellement un tracé courbe, où le conduit d'écoulement (24-29 ; 53-55 ; 71-73 ; 101A-106A ; 121-126 ; 141 ; 146 ; 149 ; 161-166), qui présente au moins partiellement un tracé courbe, est prévu dans un profilé extrudé, **caractérisé en ce que** le tracé courbe varie transversalement par rapport à la direction d'extension et / ou dans la direction d'extension du conduit d'écoulement, ou bien le conduit d'écoulement au moins au nombre de un présente, en aval, une ondulation qui augmente, en particulier une amplitude (A) qui augmente et / ou un écartement (T) qui diminue.

2. Echangeur de chaleur selon la revendication 1, **caractérisé en ce que** plusieurs conduits d'écoulement (24-29 ; 53-55 ; 71-73 ; 101A-106A ; 121-126 ; 141 ; 146 ; 149 ; 161-166), qui présentent au moins partiellement un tracé courbe, sont prévus dans un profilé extrudé.

3. Echangeur de chaleur selon la revendication 1 ou 2, **caractérisé en ce que** le profil extrudé présente au moins une paroi extérieure (68) baignée par un milieu, en particulier par un moyen de refroidissement, et présente au moins une paroi intérieure (65-67) le long de laquelle s'écoule un fluide, en particulier un gaz d'échappement.

4. Echangeur de chaleur selon la revendication 3, **caractérisé en ce que** la paroi extérieure (68) baignée par le milieu présente, en section, un tracé au moins partiellement arrondi.

5. Echangeur de chaleur selon l'une quelconque des revendications précédentes, **caractérisé en ce que** plusieurs profilés extrudés sont intégrés, lesquels profilés extrudés comprennent à chaque fois au moins un conduit d'écoulement (24-29 ; 53-55 ; 71-73 ; 101A-106A ; 121-126 ; 141 ; 146 ; 149 ; 161-166) qui présente au moins partiellement un tracé courbe, lesdits profilés extrudés comprenant de préférence plusieurs conduits d'écoulement qui présentent au moins partiellement un tracé courbe.

6. Echangeur de chaleur selon l'une quelconque des revendications précédentes, **caractérisé en ce que** le conduit d'écoulement au moins au nombre de un présente, en plus du tracé au moins partiellement courbe, un retour de flux à 180°.

7. Echangeur de chaleur selon l'une quelconque des revendications précédentes, **caractérisé en ce que** le tracé courbe présente des courbures ou des ondulations produisant des turbulences.

8. Echangeur de chaleur selon l'une quelconque des revendications précédentes, **caractérisé en ce que** le profilé extrudé présente des zones incurvées ou courbes et **en ce qu'**il est façonné en prenant en particulier une forme ondulée, une forme en dents de scie ou une forme de trapèze.

9. Echangeur de chaleur selon l'une quelconque des revendications précédentes, **caractérisé en ce que** le profilé extrudé est fixé côté extrémité, en particulier des deux côtés sur un élément de fond (51).

10. Echangeur de chaleur selon l'une quelconque des revendications 1 à 9, **caractérisé en ce que** le profilé extrudé est fixé, côté extrémité, sur deux éléments de fond (21, 22 ; 98, 99 ; 114, 115 ; 152, 154), et **en ce que**, en particulier, les extrémités du profilé extrudé débouchent à chaque fois dans l'un des éléments de fond (21, 22 ; 98, 99 ; 114, 115 ; 152, 154).

11. Echangeur de chaleur selon l'une quelconque des revendications précédentes, **caractérisé en ce que** le profilé extrudé est disposé dans un boîtier (2 ; 32 ; 42 ; 82 ; 102) pouvant être traversé par un moyen de refroidissement, en particulier liquide, lequel boîtier présente en particulier une arrivée et une évacuation pour le moyen de refroidissement.

12. Echangeur de chaleur selon la revendication 11, **caractérisé en ce qu'**au moins un élément déflecteur servant au guidage du moyen de refroidissement et / ou des moyens de support servant à la fixation des conduits d'écoulement sont disposés dans le boîtier.

13. Echangeur de chaleur selon l'une quelconque des revendications précédentes, **caractérisé en ce que** des ailettes, des tôles déflectrices (157) ou d'autres éléments (157), en particulier des éléments de support (157), sont disposés, en particulier intégrés en étant brasés, collés ou encastrés entre les profilés extrudés.
